# EUROPEAN PATENT SPECIFICATION

(11) **EP 2 340 543 B1**
(45) Date of publication and mention of the grant of the patent: **08.08.2018**
(21) Application number: 09813365.5
(22) Date of filing: 11.09.2009
(51) Int. Cl.: C08K 3/22, C08K 3/36, C08L 21/00, C01B 33/146, C09C 3/12, C09C 1/30

(54) **METAL OXIDE DISPERSION**
METALLOXID-DISPERSION
DISPERSION D OXYDE MÉTALLIQUE

(30) Priority: 11.09.2008 US 191736 P
(43) Date of publication of application: 06.07.2011
(73) Proprietor: Grace GmbH, 67545 Worms (DE)
(72) Inventor: FRUGE, Daniel, Ray, Wilimington DE 19803 (US); DE WINTER, Kris, P., 67273 Weisenheim Am Berg (DE); LELIVELD, Nicolas, NL-6227 XG Maastricht (NL); HERRIG, Horst, 67295 Bolanden (DE)
(74) Representative: Uexküll & Stolberg
(86) International application number: PCT/US2009/005094
(87) International publication number: WO 2010/030368

(56) References cited:
- US-A- 4 652 470
- US-A- 6 025 415
- US-A1- 2004 242 729
- US-A1- 2005 107 520
- US-A1- 2008 093 586
- US-B1- 6 534 044
- US-B1- 6 579 929
- US-B1- 6 896 876
- US-B2- 7 393 571

## Description

### FIELD OF THE INVENTION

The present invention is directed to metal oxide dispersions, polymeric compositions including such metal oxide dispersions, and methods of making the metal oxide dispersions.

### BACKGROUND OF THE INVENTION

There is a need in various markets for metal oxide particulate dispersions that are non-agglomerated, stabilized, and non-aqueous such that they can be easily utilized in polymeric compositions without the downfalls of conventional fillers, such as dusting, VOC emission, difficulty of dispersion, inadequate mechanical properties, etc.

### SUMMARY OF THE INVENTION

The present invention addresses some of the difficulties and problems discussed above by the discovery of new metal oxide dispersions and polymeric products prepared therefrom. The composition includes metal oxide particles suspended in oil or other suited media, with or without stabilization.

In one exemplary embodiment, a metal oxide particulate dispersion of the present invention comprises oil, and metal oxide particles having an average particle size of about 35 microns or less, wherein the dispersion includes less than about 10% by weight water and water miscible solvent, and 10 to 50 % solids, based on the total weight of the dispersion, wherein said metal oxide particles are treated with a hydrophobating agent. The particles may include a mixture of different metal oxide particulates, such as different sizes, different shapes, different porosities, different compositions, different physical structures, etc.

In a further exemplary embodiment, a metal oxide particulate dispersion of the present invention comprises oil, metal oxide particles having a first average particle size and metal oxide particles having a second average particle size. The particles may also possess different shapes, different porosities, different compositions, different physical structures, etc.

The present invention is further directed to methods of forming the exemplary metal oxide particulate dispersions. One exemplary method comprises forming a dispersion of metal oxide particles in water, removing at least partially the water from the dispersion, adding oil to the metal oxide particles to form a dispersion wherein the dispersion includes less than about 10 % by weight water and water miscible solvent, and 10 to 50 % solids, based on the total weight of the dispersion, wherein said metal oxide particles are treated with a hydrophobating agent. The process may optionally replace at least partially the water with a solvent, which is removed prior to formation of the oil and metal oxide particulate dispersion.

One further exemplary method comprises forming a dispersion of hydrous metal oxide particles in an oil or other suited solvent by using grinding equipment like a pearl mill or a high shear mixer, optionally removing at least partially the water from the dispersion, adding more oil to the metal oxide particles to form a dispersion wherein the dispersion includes less than about 10 % by weight water and water miscible solvent, and 10 to 50 % solids, based on the total weight of the dispersion, wherein said metal oxide particles are treated with a hydrophobating agent. The process may optionally replace at least partially the water with a solvent, which is removed prior to formation of the oil and metal oxide particulate dispersion. In at least one step of the process, the addition of a stabilizing agent like, e.g., surface active agents or hydrophobating agents like silanes to stabilize the metal oxide particles in the dispersion is employed.

In another exemplary embodiment, a polymeric composition of the present invention comprises polymer, oil, and metal oxide particles having an average particle size of about 35 microns or less, wherein the composition includes less than about 10 % by weight water and water miscible solvent, and 10 to 50 % solids, based on the total weight of the dispersion, wherein said metal oxide particles are treated with a hydrophobating agent. The particles may include a mixture of different metal oxide particulates, such as different sizes, different shapes, different porosities, different compositions, different physical structures, etc. The resulting polymeric composition is particularly useful as a material for various articles, including films, coatings, molded products, extruded products, etc.

In a further embodiment, an exemplary method of forming a polymeric composition of the present invention comprises forming a dispersion of metal oxide particles in water, removing the water from the dispersion, adding oil to the metal oxide particles to form a dispersion wherein the dispersion includes less than about 10 % by weight water and water miscible solvent, and 10 to 50 % solids, based on the total weight of the dispersion, wherein said metal oxide particles are treated with a hydrophobating agent, and mixing the dispersion with polymer.

These and other features and advantages of the present invention will become apparent after a review of the following detailed description of the disclosed embodiments and the appended claims.

### DETAILED DESCRIPTION OF THE INVENTION

The present invention is directed to metal oxide dispersions and polymeric products made therefrom. The present invention is further directed to methods of making such metal oxide dispersions, as well as methods of making such polymeric products. A description of exemplary metal oxide dispersions, polymeric products made therefrom, and methods of making such metal oxide dispersions and polymeric products is provided below.

The metal oxide dispersion of the present invention possesses properties that enable products made therefrom to provide one or more advantages when compared to known metal oxide dispersions.

In one exemplary embodiment, a metal oxide particulate dispersion of the present invention comprises oil, and metal oxide particles having an average particle size of about 35 microns or less, wherein the dispersion includes less than about 10 % by weight water and water miscible solvent, and 10 to 50 % solids, based on the total weight of the dispersion, wherein said metal oxide particles are treated with a hydrophobating agent. The particles may include a mixture of different metal oxide particulates, such as different sizes, different shapes, different porosities, different compositions, different physical structures, etc.

As used herein the term "porous" means metal oxide particles having significant internal porosity as measured by nitrogen porisimetry, i.e., a porosity of more than about 0.1 cc/g, and the term "non-porous" means metal oxide particles having little or no internal porosity, i.e., an internal porosity of less than about 0.1 cc/g. In some cases, metal oxide particles with an average particle size of about 100 nanometers or less that dry to powders with significant void volumes cause errors in nitrogen porisimetry values. In these cases, porosity may be calculated from density measurements. Examples of porous particles include silica gel, precipitated silica, fumed silica, boehmite alumina, etc., and examples of non-porous particles include colloidal silica, alumina, titania, etc.

The particles may be of the same or different chemical compositions and may be of the same or different physical structures. The particles may be composed of metal oxides, sulfides, hydroxides, carbonates, silicates, phosphates, etc, but are preferably metal oxides. As used herein, "metal oxides" is defined as binary oxygen compounds where the metal is the cation and the oxide is the anion. The metals may also include metalloids. Metals include those elements on the left of the diagonal line roughly drawn from boron to polonium on the periodic table. Metalloids or semi-metals include those elements that are on this line. Examples of metal oxides include silica, alumina, titania, zirconia, etc., and mixtures thereof. The particles may be of the same or different physical form or structure. For example, the particles may be amorphous or crystalline, and may be fumed, colloidal, boehmitic, precipitated, gel, and so on.

Metal oxide particles in this embodiment of the present invention typically possess a median particle size of equal to or less than 5, 4, 3, 2, or 1 microns, preferably equal to or less than about 900, 800, 700, 600, 500, 400, 300, 200, or 100 nanometers, more preferably equal to or less than about 90, 80, 70, 60, 50, 40, 30, 20, 10, or 5 nanometers.

In one embodiment of the present invention, the metal oxide particles are colloidal. By the term "colloidal" or "colloidal sol" it is meant particles originating from dispersions or sols in which the particles do not settle from dispersion over relatively long periods of time. Such particles are typically below one micron in size. Examples of such metal oxide sols or colloidal dispersions include alumina, silica, titania, zirconia, etc., and mixtures thereof. A preferred colloidal metal oxide particulate according to the present invention is colloidal silica dispersed in water. Colloidal silica having an average particle size in the range of about 1 to about 300 nanometers and processes for making the same are well known in the art. See U.S. Patents 2,244,325; 2,574,902; 2,577,484; 2,577,485; 2,631,134; 2,750,345; 2,892,797; 3,012,972; and 3,440,174. Colloidal silica sols having average particle sizes in the range of 5 to 100 nanometers are more preferred for this embodiment. The dispersion may contain about 10 to about 50 wt% solids content. For formulation flexibility, it is usually desirable to provide a dispersion with the highest solids content that will maintain stability (i.e., a dispersion containing substantially non-aggregated particles). This poses an upper limit to the solids content, which in turn is directly related to the metal oxide particle size. That is, dispersions containing relatively small metal oxide particles have a solids content limit that is lower than those containing relatively larger particles. More specifically, metal oxide particles with average particle size between about 5 and 10 nanometers may form a stable dispersion up to about 20 wt%, metal oxide particles with average with average particle size between about 10 and 15 nm may form a stable dispersion up to 30 wt%, and so on. Colloidal silicas may have a specific surface area (as measured by BET nitrogen adsorption) in the range of 9 to about 2700 m²/g SiO₂. Colloidal silica sols having specific surface areas between about 30 and 600 m2/g SiO₂ are preferred. Colloidal silica is generally considered nonporous as defined herein.

Depending on the particular application of use, the particle size distribution may be either monodisperse (narrowly distributed about the particle size mean) or polydisperse (widely distributed about the particle size mean).

Most colloidal silica sols contain a stabilizing alkali. The alkali is usually an alkali metal hydroxide, the alkali metals being from Group IA of the Periodic Table (hydroxides of lithium, sodium, potassium, etc.) Most commercially available colloidal silica sols contain sodium hydroxide, which originates, at least partially, from the sodium silicate used to make the colloidal silica, although sodium hydroxide may also be added to stabilize the sol against gelation. Some colloidal silica sols are prepared by removing these alkali metal ions and stabilizing with another alkaline substance, such as ammonium hydroxide. In addition, some colloidal silica sols contain chloride, sulfate or carbonate compounds.

It is preferred in this exemplary embodiment to use colloidal silica sols that are substantially free of all cations in solution, including alkali metal ions, ammonium ions, etc., and more preferred to use colloidal silica sols that are also substantially free of anions in solution, including chloride, sulfate, carbonate ions, etc. "Deionization" methods to remove such ions are well known and include ion exchange with suitable ion exchange resins (U.S. Patents 2,577,484 and 2,577,485), dialysis (U.S. Patent 2,773,028) and electrodialysis (U. S. Patent 3,969,266). Of these methods, ion exchange using suitable cation and anion exchange resins are preferred. To impart stability of the colloidal silica sol against gelation, the particles may also be surface modified with aluminum as described in U.S. Patent 2,892,797, after which the modified silica is deionized by any of the methods given above.

In an alternative embodiment, the metal oxide particulate comprises porous materials, such as precipitated silica. As is well known in the art, the formation of precipitated silica occurs in a reaction between waterglass and an acid via first forming a seed of primary particles which can be grown to larger particles, followed by an aggregation and then by an agglomeration of the aggregates. Depending on the reaction conditions, the agglomerates can be grown even larger by so-called reinforcement. At a certain agglomerate size and concentration, the hydrous silica begins to settle from the reaction slurry as a precipitate. To isolate the hydrous silica from the slurry and to remove the reaction electrolyte from the crude silica, the precipitate is filtered from the slurry and washed. The resulting filtercake then is dried using drying equipment as known in the art. Depending on the method and extent of drying, a stiffening of the silica structure will occur during the drying step in which irreversible Si-O-Si-links are formed from initial silanol groups. In a further embodiment of the present invention, the colloidal metal oxide particles stem from the primary particles, grown particles, aggregated particles, agglomerated particles or the filtercake of a general metal oxide precipitation process as described above.

Porous metal oxide particles of the present invention also have a pore volume that makes the particles desirable components in polymeric compositions. Typically, the porous particles have a pore volume as measured by nitrogen porosimetry of at least about 0.40 cc/g, and more typically, 0.60 cc/g. In one exemplary embodiment of the present invention, the porous particles have a pore volume as measured by nitrogen porosimetry of at least about 0.70 cc/g. Desirably, the porous particles have a pore volume as measured by nitrogen porosimetry of from about 0.70 to about 0.85 cc/g.

Porous particles of the present invention also have a surface area as measured by the BET method (i.e., the Brunauer Emmet Teller method) of at least about 110 m²/g. In one exemplary embodiment of the present invention, the porous particles have a BET surface area of from about 150 m²/g to about 220 m²/g. In a further exemplary embodiment of the present invention, the porous particles have a BET surface area of about 172 m²/g.

Pore volume and surface area may be measured using, for example, an Autosorb 6-B unit commercially available from Quantachrome Instruments (Boynton Beach, FL). Typically, the pore volume and surface area of porous powder is measured after drying at about 150°C, and degassing for about 3 hours at 150°C under vacuum (e.g., 50 millitorr).

Metal oxide particles in this embodiment of the present invention typically possess a median particle size of equal to or less than 45 microns, preferably equal to or less than about 35 microns, more preferably equal to or less than about 25 microns, and even more preferably equal to or less than about 20, 19, 18, 17, 16, 15, 14, 13, 12, 11, 10, 9, 8, 7, 6, 5, 4, 3, 2, 1 microns and any size below one micron including 900, 800, 700, 600, 500, 400, 300, 200, or 100 nanometers, and even less than about 100 nanometers.

In this embodiment of the present invention, oil is also utilized to form the metal oxide dispersion. As defined herein, the term "oil" means a substance that is in a viscous liquid state at ambient temperatures or slightly warmer, and is both hydrophobic, (i.e., immiscible with water) and lipophilic (i.e., miscible with other oils). This general definition includes compound classes with otherwise unrelated chemical structures, properties, and uses, including vegetable oils, petrochemical oils, and volatile essential oils. Oil is a nonpolar substance.

In a preferred embodiment, the oil includes those oils such as those utilized to facilitate the manufacturing of polymeric materials or articles (i.e., "process oils"), such as dispersing, kneading, extrusion, molding, etc., by means of its ability to penetrate into the texture of a polymer. Such oils are also used to improve the physical properties of polymeric products. Of particular interest are process oils that have suitable affinity for rubber. Such process oils may include vegetable, paraffinic, aromatic, napthenic or similar oils, and mixtures thereof. For example, the petrochemical oils may include DAE (distilled aromatic extracts), RAE (residual aromatic extracts), TDAE (treated distilled aromatic extracts), MES (mild extracted solvents, naphthenic oils, and mixtures thereof, with TDAE being preferred. Examples of vegetable oils include rapeseed oil, sunflower oil, olive oil, peanut oil, soya oil, linseed oil, maize germ oil, cottonseed oil, palm kernel oil, teaseed oil, hazelnut oil, walnut oil, caster oil, rice oil, maize oil, palm oil, and mixtures thereof. Rapeseed and sunflower oils are preferred.

In an optional embodiment, the surfaces of the metal oxide particulates are treated to impart greater stability when mixed into the oil. Since the surfaces of certain metal oxides are very hydrophilic (e.g., silica), the particulates tend to aggregate or agglomerate into larger particulates in the oil, which are then not easily dispersed into polymeric materials. If the surface of the metal oxide particulates is treated with hydrophobic material, the particulates do not aggregate, thereby remaining discrete and stable particles. Such hydrophobic materials include a variety of organic compounds, such as silanes, esters, alcohols, etc., and examples for rendering hydrophilic metal oxides hydrophobic may be found in U.S. Patents Nos. 2,786,042 and 2,801185. Of these, silanes are preferred because they present fewer processing difficulties and the resulting surface modification is more hydrolytically stable. Of the silanes, alkoxysilanes are preferred. Alkoxysilanes have the typical structure of X-Si-(OY)₃, in which the X is selected to give compatibility with the oil and performance in a given application. X may be a linear or branched alkyl group (e.g., CH₃-(CH₂)n-, where n = 0, 1, 2, etc. are generic forms of linear alkyl groups), benzyl group, or any other nonpolar group. X=methyl, ethyl, or propyl alkyl groups may be preferred based on cost and because they will impart compatibility of the modified metal oxide particles with most oils. Others may be selected based on application need. Y is typically an alkyl group or a multiplicity of alkyl groups that forms alcohol compounds (YOH) with reaction on the silica surface. Preferably, Y is methyl or ethyl due to availability and because their alcohol reaction products may easily be removed, if necessary.

Mixtures of silanes may also be used. By way of example, one may combine silanes with different X groups for greater cost effectiveness and/or greater compatibility with a specific oil. One may also add a silane or mixture of silanes such that the X group is reactive with the polymer of interest. For rubber, for example, X may contain sulfur to help bond the silica particle to the rubber matrix. 3-mercaptopropyltriethyoxysilane is an example of a silane in this example. If the polymer-reactive X group is sufficiently nonpolar to render the silica compatible with the oil, the silane may be used to cover from a small portion to all of the silica surface, with another nonpolar silane added to react with the remaining surface. If the polymer-reactive X group is not sufficiently polar, then this silane may be combined with another silane. The polymer-reactive silane may be used up to the extent that it will give the desired reactivity with the polymer but not to the extent that it impacts oil compatibility and the balance being a more nonpolar silane to render the dispersion stable. Other silanes may be utilized as the hydrophobic material of the present invention, including bifunctional sulfur-bridged silianes or mixtures thereof such as those set forth in U.S. Patents Nos. 4,474,908; 5,580,919; 5,780,538; 6,306,949; 6,573,324 and 7,285,584. Examples include di- and tetra-sulfur-bridged silanes, such as bis(triethoxysilylpropyl) polysulfide and bis(triethoxysilylpropyl) disulfide.

The amount of hydrophobic material present in the metal oxide dispersion depends on the liquid utilized, as well as the surface area of the particles, in the metal oxide dispersion. Typically, it is unnecessary for the entire surface of the metal oxide particulates to be covered with the hydrophobic material. If, for example, most of the liquid used in the metal oxide dispersion is relatively polar, then minimal coverage of the metal oxide surface is needed (e.g., between 0 and 20 % need be covered), whereas if the liquid is nonpolar in nature, as with oils, then more coverage of the surface is needed (e.g., between 20 and 100%). The amount of silane hydrophobic material required to provide coverage of the metal oxide surface will vary with the size of the silane hydrocarbon groups and their degree of branching and with the particle size and distribution of the metal oxide particles being treated, an amount required to form a monolayer completely on the surface may range from about 1% by weight to about 200% by weight based on the total weight of the metal oxide. In a preferred embodiment the amount of silane compound ranges from about 1 % by weight to about 50 % by weight based on the total weight of the metal oxide particles.

The present invention is further directed to methods of forming the exemplary metal oxide particulate dispersions. One exemplary method comprises forming a dispersion of metal oxide particles in water, removing the water from the dispersion, adding oil to the metal oxide particles to form a dispersion wherein the dispersion includes less than 10% by weight water miscible solvent, based on the total weight of the dispersion. The process may optionally replace at least partially the water with a solvent, which is removed prior to or during formation of the oil and metal oxide particulate dispersion.

Metal oxide particulates are prepared using conventional techniques. The particulates may be amorphous or crystalline, and may be fumed, colloidal, boehmitic, precipitated, gel, and so on, and possess a variety of median particle sizes. For example, metal oxide particles in one embodiment of the present invention typically possess a median particle size of equal to or less than 5, 4, 3, 2, or 1 microns, preferably equal to or less than about 900, 800, 700, 600, 500, 400, 300, 200, or 100 nanometers, more preferably equal to or less than about 90, 80, 70, 60, 50, 40, 30, 20, 10, or 5 nanometers. Metal oxide particles in another embodiment of the present invention typically possess a median particle size of equal to or less than 45 microns, preferably equal to or less than about 35 microns, more preferably equal to or less than about 25 microns, and even more preferably equal to or less than about 20, 19, 18, 17, 16, 15, 14, 13, 12, 11, 10, 9, 8, 7, 6, 5, 4, 3, 2, 1 microns and any size below one micron including 900, 800, 700, 600, 500, 400, 300, 200, or 100 nanometers, and even less than about 100 nanometers. The particulates may be in the form of an aqueous dispersion, a filtercake or may be in dry form as a powder.

In an embodiment where aqueous metal oxide particulate dispersions are utilized as starting material, removing the water (e.g., by drying) may cause undesired aggregation. In addition, the compounds used to render the metal oxide particulates hydrophobic may not be miscible in water. For these reasons, it may be desirable to either mix a water-miscible organic solvent (e.g., a polar organic solvent) with the aqueous metal oxide dispersion and/or to replace some or most of the water in the dispersion with water-miscible organic solvents (e.g., polar solvents such as alcohols) prior to rendering the particles hydrophobic. Such processes are described in U.S. Patents Nos. 2,786,042 and 2,801,185. Alternatively, with metal oxide dispersions that are not affected by drying, the aqueous dispersion may be dried and then mixed with water-miscible organic solvents, after which the metal oxide/organic solvent mixture or dispersion is treated with hydrophobic material. As defined herein, the term "solvent" means those liquids that are water-miscible, and capable of dispersing the metal oxide particulates while facilitating the removal of water. Further, the solvent may enable the reaction of the hydrophobic material to the metal oxide surface. Suitable solvents include alcohols, such as ethanol, propanol, butanol, isopropanol, isobutanol, tertiary butyl alcohol, methyl isobutyl carbinol, etc.; ethers, such as diethyl ether, dicholorethyl ether, propylene oxide, etc.; ketones, such as acetone, methyl isopropyl ketone, methyl ethyl ketone, etc.; esters, such as butyl acetate, etc.; phosphates, such as tributyl phosphate, triisoamyl phosphate, triethyl phosphate, etc.; amides, such as dimethyl formamide, etc.; and mixtures thereof. Such solvents may also be substituted with other moieties. Moreover, other hydrocarbons may be present in the solvent, including benzene, toluene, hexane, cyclohexane, and halogenated hydrocarbons, such as carbon tetrachloride, chloroform, tetrachloroethylene. In this embodiment, the solvent may be present in the dispersion in an amount sufficient to provide a dispersion medium for the metal oxide particulates such that water may be extracted from the dispersion. In a preferred embodiment, the water-miscible solvent includes a majority of volatile solvent so that it is more readily removed at a later stage, such as when the metal oxide particulates are mixed with the oil to form the metal oxide dispersion. Choice of the solvent depends on the method of water removal. If, for, example, azeotropic distillation is to be used, a solvent such as 1-propanol is preferred because the azeotrope contains a high water content. If ultrafiltration is used to exchange water for the water-miscible solvent, the selection depends more on the dispersion rheology and compatibility with the ultrafiltration membrane. Moreover, another embodiment includes the use of a mixture of water-miscible solvent and a small amount of oil that is utilized in the final metal oxide dispersion.

In an embodiment in which the metal oxide particulates are in dry form, they may be added to a water-miscible solvent, wherein they will be processed as mentioned above. Alternatively, the dry powder may be mixed directly with the oil to form the metal oxide dispersion. Of course, if the metal oxide surface is to be hydrophobically modified, the modifying hydrophobic material should be compatible with the oil and be reactive with the silica surface under these conditions.

In an exemplary embodiment according to the present invention, silica is the metal oxide particulate, the solvent utilized includes alcohols, the hydrophobic material includes silanes, and the oil includes process oils. For example, where colloidal silica is utilized as the metal oxide, an aqueous, substantially deionized, colloidal silica sol mentioned herein is mixed with a water-miscible solvent, such as an alcohol. A silane may be added at this stage or after the water is substantially removed, e.g., by azeotropic distillation. The silane reaction with the silica surface is facilitated with heat and the organosol may be heated under reflux until the surface modification is complete. In the resulting organosol, water may be present in an amount that will not cause incompatibility or emulsification when the organosol is introduced into the oil. The amount of water in the organosol may be less than 20% by weight of the organosol, preferably less than 15 wt%, and more preferably less than 10, 9, 8, 7, 6, 5, 4, 3, 2, 1 wt% or even less. The solids content of the organosol should be as high as possible for economical use of organic solvent but cannot be so high as to cause particle aggregation. The dispersion may contain as high as 50% solids for particle sizes that are greater than about 20 nm, and 10-40% solids for particle sizes that are between 7 and 20 nm and as high as 20% solids for smaller particle sizes.

Subsequently, the oil, such as process oil, is added to the organosol and the water-miscible solvent is removed by distillation, either at ambient pressure or under vacuum. To reduce distillation vessel volume, the organosol may be pumped into the oil heated to the boiling point of the water-miscible solvent, concomitant with removing the water-miscible solvent by distillation. Alternatively, the water-miscible solvent is removed initially and the oil is subsequently added to the silica sol. The amount of water miscible solvent present in the oil metal oxide dispersion may be less than 20% by weight, preferably less than 15 wt%, and more preferably less than 10, 9, 8, 7, 6, 5, 4, 3, 2, 1 wt% or even less, based on the total weight of the metal oxide dispersion. The dispersion contains about 10 to about 50 wt% solids content based on the weight of the dispersion. The solids content of the oil dispersion should be as high as possible for greatest flexibility in use but cannot be so high as to cause particle aggregation or sedimentation. The dispersion may contain as high as 50% solids for particle sizes that are greater than about 20 nm, and 30-40% solids for particle sizes that are smaller than about 20 nm. If a polymer-reactive silane is used, the resulting metal oxide dispersion may be used to form an inorganic-organic polymer matrix.

As a result of the above-described physical properties of the metal oxide dispersion of the present invention, the dispersion is well suited for use in a variety of liquid and solid products. For example, the dispersion may be utilized as a thickener, emulsifier, adsorbent, carrier, extender filler, dispersing agent, activator, diluent, excipient, etc.

In a further exemplary embodiment, a metal oxide particulate dispersion of the present invention comprises oil, metal oxide particles having a first mean particle size and metal oxide particles having a second mean particle size. The particles may also possess different shapes, different porosities, different compositions, different physical structures, etc.

In an exemplary embodiment according to the present invention, the metal oxide particles having a first mean particle size ("first metal oxide particles") are formed into a dispersion and then the metal oxide particles having a second mean particle size ("second metal oxide particles") are added thereto. Alternatively, the first metal oxide particles in dry form may be added to the second metal oxide particles, also in dry form or in the form of a dispersion. The first metal oxide particles of the present invention may be combined with the second metal oxide particles at a ratio of about 20/1 to about 1/1 (dry basis), preferably about 15/1 to about 1.5/1, more preferably about 12/1 to about 1.8/1, and even more preferably about 10/1 to about 2/1. The solids content of the oil dispersion should be as high as possible for greatest flexibility in use but should not be so high as to cause particle aggregation or sedimentation. The dispersion may contain as high as 50% solids for particle sizes that are greater than about 20 nm, and 10-40% solids for particle sizes that are smaller than about 20 nm. Since viscosity is often related to the solids content, the maximum solids content may be reduced depending on the application. In an exemplary embodiment of the present invention, where the first metal oxide particles are colloidal silica and the second metal oxide particles are precipitated silica, the precipitated silica particles are added to a colloidal particle oil dispersion at ratio about 9/1 to about 7/3 (dry ratio) with a solids content of about 10 to about 40 wt% based upon the total weight of the dispersion. If the first metal oxide particles are in the form of an aqueous dispersion, it may be necessary to reduce the water content of the dispersion prior to or after the addition to the second metal oxide particles by means of a vacuum distillation or other suitable conventional separation equipment which is known to those skilled in the art.

The above-mentioned metal oxide dispersions are particularly useful as additives in polymeric materials. The dispersions may be used with polymeric materials to produce films, molded products, extruded products or any other polymeric products, which impart improved tensile, compression and shear strength. The metal oxide dispersions also provide a convenient means of adding finely dispersed metal oxide materials homogeneously to the polymer formulations, since they are suspended in a solvent or oil already used in the process. The often cumbersome incorporation of conventional silica fillers thus can be made easier and more economical as the compounding time and the mechanical energy required to compound the metal oxide particulates into the polymer formulation is significantly reduced. The resulting polymeric materials possess improved properties due to the increased dispersion of the metal oxide in the polymeric material. If silanized metal oxides are incorporated in this way, the usual emission of environmentally unfriendly alcohol during the common polymer compounding process may be significantly reduced or eliminated. Also, the amount of silica fillers in powder, granulate or micropearl form, which is added during the compounding step as a dry material may be significantly reduced.

Accordingly, another exemplary embodiment of the present invention relates to a polymeric composition comprising polymer, oil, and metal oxide particles having an average particle size of 35 microns or less, wherein the composition includes less than 10 % by weight water and water miscible solvent, based on the total weight of the composition. The particles may include a mixture of different metal oxide particulates, such as different sizes, different shapes, different porosities, different compositions, different physical structures, etc. The resulting polymeric composition is particularly useful as a material for various articles, including films, coatings, molded products, extruded products, etc.

As defined herein, "polymer" means high-molecular-weight materials composed of repeating subunits. These materials may be organic, or organometallic, and synthetic or natural in origin. Natural organic polymers include polysaccharides (or polycarbohydrates) such as starch and cellulose, nucleic acids, and proteins. Siloxanes or polysiloxanes represent synthetic organometallic polymers. Synthetic polymers are often referred to as "plastics" and may be classified in at least three main categories: thermoplastics, thermosets and elastomers. Examples of thermoplastics include acrylonitrile butadiene styrene, acrylic, celluloid, cellulose acetate, ethylene-vinyl acetate, ethylene vinyl alcohol, fluoroplastics, ionomers, acrylic/PVC alloy, liquid crystal polymer, polyacetal, polyacrylates, polyacrylonitrile, polyamide, polyamide-imide, polyaryletherketone, polybutadiene, polybutylene, polybutylene terephthalate, polyethylene terephthalate, polycyclohexylene dimethylene terephthalate, polycarbonate, polyhydroxyalkanoates, polyketone, polyester, polyethylene, polyetheretherketone, polyetherimide, polyethersulfone, polyethylenechlorinates, polyimide, polylactic acid, polymethylpentene, polyphenylene oxide, polyphenylene sulfide, polyphthalamide, polypropylene, polystyrene, polysulfone, polyvinyl chloride, polyvinylidene chloride, Spectralon® and the like. Examples of thermosetting and elastomeric materials include vulcanized rubber, formaldehyde resin, urea-formaldehyde foam/resin, melamine resin, polyester resin, epoxy resin, polyimide resin, natural rubber, synthetic polyisoprene, butyl rubber, halogenated butyl rubbers (chloro butyl rubber; bromo butyl rubber), polybutadiene, styrene-butadiene rubber, nitrile rubber (copolymer of polybutadiene and acrylonitrile), hydrogenated nitrile rubbers, chloroprene rubber, EPM (ethylene propylene rubber), EPDM rubber (ethylene propylene diene rubber), epichlorohydrin rubber, polyacrylic rubber, silicone rubber, fluorosilicone rubber, fluoroelastomers, perfluoroelastomers, polyether block amides, chlorosulfonated polyethylene, ethylene-vinyl acetate, thermoplastic elastomers such as Hytrel®, etc., thermoplastic vulcanizates, such as Santoprene® TPV, polyurethane rubber, resilin and elastin, polysulfide rubber, and the like.

In this embodiment, the metal oxide dispersion may be utilized in the polymeric composition or material in an amount sufficient to impart advantageous properties to the material. One of the advantages of utilizing the metal oxide dispersion of the present invention in polymeric compositions is the ability to reduce the amount of conventional fillers typically added to such compositions. The amount of metal oxide dispersion employed in the polymeric composition may range from about 0.1 wt% to about 60 wt%, from about 0.5 wt% to about 50 wt%, from about 1.0 wt% to about 40 wt%, or from about 2.0 wt% to about 30 wt%, based on the total weight of the metal oxide dispersion. The metal oxide particulates in the dispersion may also be surface treated with hydrophobating agent or agents as set forth herein. Another advantage of the metal oxide dispersion of the present invention lies in the reduced amount of solvent present in the dispersion, which alleviates the need for removing the solvent from the polymeric composition. The amount of water and water miscible solvent present in the polymeric composition may be less than 20% by weight, preferably less than 15 wt%, and more preferably less than 10, 9, 8, 7, 6, 5, 4, 3, 2, 1 wt% or even less, based on the total weight of the polymeric composition.

In an embodiment where at least one other metal oxide metal oxide particle is added to the metal oxide dispersion, the mean particle size of this second metal oxide particle may be greater than the mean particle size of the initial or first metal oxide particle. Additionally, the second metal oxide particle may have the same or different composition, shape, or other properties (e.g., porosity, surface area, etc.). In an exemplary embodiment, the first metal oxide particle is colloidal silica having a mean particle size of from about 5 nm to about 300 nm and the second metal oxide particle is precipitated silica having a mean particle size of from about 0.1 microns to about 35 microns. The amount of second metal oxide particle utilized in the polymeric composition may range from about 0.1 wt% to about 99 wt%, about 0.1 wt% to about 98 wt%, from about 0.1 wt% to about 97 wt%, or from about 0.1 wt% to about 95 wt%, based on the total weight of the metal oxide dispersion.

Additives may be utilized in the polymeric composition, such as pigments, fillers, coupling agents (for coupling the metal oxides to the polymeric materials), curing aids such as vulcanizing agents, activators, retarders and accelerators, processing additives such as oils, resins and plasticizers, zinc oxides, waxes, fatty acids, antioxidants, peptizing agents and other conventional additives. The additives may be added to the polymeric composition using conventional techniques and in typical amounts as is readily known in the industry and as set forth in U.S. Patents Nos. 5,866,650; 5,872,176; 5,916,961; 6,579,929 and 7,101922.

In a further embodiment, an exemplary method of forming a polymeric composition of the present invention comprises forming a dispersion of metal oxide particles in water, removing the water from the dispersion, adding oil to the metal oxide particles to form a dispersion wherein the dispersion includes less than 10 % by weight water and water miscible solvent, based on the total weight of the dispersion, and mixing the dispersion with polymer.

In this embodiment, the polymeric composition of the present invention may be prepared by conventional means, such as blending, extruding, blowing, molding, etc. Moreover, the polymeric composition may be in the form of a masterbatch (i.e., a homogeneous mixture of polymer and one or more materials in high proportions for use as a raw material in the final mixing of the compound). Masterbatches are used to improve dispersion of reinforcing agents, improve breakdown of the polymer, lower the heat history of a compound or facilitate the weighing or dispersion of small amounts of additives.

In an exemplary embodiment, the polymeric composition comprises an elastomeric composition such as rubber. The metal oxide dispersion of the present invention may be blended with any conventional rubber, such as natural rubber, synthetic rubber, or blends thereof. The amount of metal oxide dispersion employed in the elastomeric composition, based on parts by weight per 100 parts by weight elastomer ("phr"), may range from about 1 phr to about 150 phr, about 2 phr to about 130 phr, from about 3 phr to about 120 phr, or from about 4 phr to about 110 phr. The blending may be performed by any conventional means, such as any mixer (e.g., a Banbury mixer) or extruder. Alternatively, the metal oxide dispersion is mixed with a polymer or elastomer to form a masterbatch, which is then let down into a base elastomer using an extruder. The amount of metal oxide dispersion employed in the elastomeric masterbatch composition may range from about 0.1 phr to about 400 phr, from about 0.1 phr to about 300 phr, from about 0.1 phr to about 200 phr, or from about 1 phr to about 100 phr, based on the total weight of the elastomeric masterbatch composition. The amount of masterbatch added to the base elastomer may range from about 1 part to about 100 parts based on 100 parts of elastomer. In addition to the metal oxide dispersion, other additives and fillers may be utilized as described herein and may be incorporated in the elastomer in amounts of 0.1 to 300 phr, or 1 to 250 phr. Processes for fabricating elastomeric compositions are set forth in U.S. Patents Nos. 5,798,009; 5,866,650; 5,872,176; 5,939,484; 5,948,842; 6,008,295; 6,579,929; and 7,101,922, and PCT Publication No. WO2008/083243 A1.

For example, vulcanized rubber products typically are prepared by thermomechanically mixing rubber and various ingredients in a sequentially step-wise manner followed by shaping and curing the compounded rubber to form a vulcanized product. First, for the aforesaid mixing of the rubber and various ingredients, typically exclusive of sulfur and sulfur vulcanization accelerators (collectively, curing agents), the rubber(s) and various rubber compounding ingredients typically are blended in at least one, and often (in the case of silica filled low rolling resistance tires) two or more, preparatory thermomechanical mixing stage(s) in suitable mixers. Such preparatory mixing is referred to as nonproductive mixing or non-productive mixing steps or stages. Such preparatory mixing usually is conducted at temperatures of about 140°C to about 200°C, and for some compositions, about 150°C to about 170°C.

Subsequent to such preparatory mix stages, in a final mixing stage, sometimes referred to as a productive mix stage, curing agents, and possibly one or more additional ingredients, are mixed with the rubber compound or composition, at lower temperatures of typically about 50°C to about 130°C in order to prevent or retard premature curing of the sulfur curable rubber, sometimes referred to as scorching. The rubber mixture typically is allowed to cool, sometimes after or during a process intermediate mill mixing, between the aforesaid various mixing steps, for example, to a temperature of about 50°C or lower. When it is desired to mold and to cure the rubber, the rubber is placed into the appropriate mold at a temperature of at least about 130°C and up to about 200°C which will cause the vulcanization of the rubber by the S-S bond-containing groups (e.g., disulfide, trisulfide, tetrasulfide, etc.; polysulfide) on the silanes and any other free sulfur sources in the rubber mixture.

Thermomechanical mixing refers to the phenomenon whereby under the high shear conditions in a rubber mixer, the shear forces and associated friction occurring as a result of mixing the rubber compound, or some blend of the rubber compound itself and rubber compounding ingredients in the high shear mixer, the temperature autogeneously increases, i.e. it "heats up". Several chemical reactions may occur at various steps in the mixing and curing processes.

In another exemplary embodiment, the rubber composition may be prepared by first blending rubber, filler and silane, or rubber, filler pretreated with all or a portion of the silane and any remaining silane, in a first thermomechanical mixing step to a temperature of about 140°C to about 200°C for about 2 to about 20 minutes. The fillers may be pretreated with all or a portion of the silane and any remaining silane, in a first thermomechanical mixing step to a temperature of about 140°C to about 200°C for about 4 to 15 minutes. Optionally, the curing agent is then added in another thermomechanical mixing step at a temperature of about 50°C and mixed for about 1 to about 30 minutes. The temperature is then heated again to between about 130°C and about 200°C and curing is accomplished in about 5 to about 60 minutes.

In another embodiment of the present invention, the process may also comprise the additional steps of preparing an assembly of a tire or sulfur vulcanizable rubber with a tread comprised of the rubber composition prepared according to this invention and vulcanizing the assembly at a temperature in a range of about 130°C to about 200°C.

### EXAMPLES

The present invention is further illustrated by the following examples.

### EXAMPLE 1

In this example, metal oxide dispersion is prepared containing 22 nm silica particles modified with a silane and an oil. 520 g of an aqueous colloidal silica sol initially at pH 9 and containing 50% SiO₂ with a nominal specific surface area of 135 m²/g is processed in succession with a cation exchange resin in the hydrogen form, an anion exchange resin in the hydroxyl form and, finally, a cation exchange resin in the hydrogen form. The final sol exhibits pH∼1.9 and contains 47 wt% SiO₂. 1454 g 1-propanol is mixed with 428 g of the final sol until homogeneous and 45.3 g methyltriethoxysilane is added to this mixture with stirring. The mixture is stirred for 3 hours. 1207 g 1-propanol is added to a 2 Liter round bottom flask, which is then connected to a condenser common to laboratory operations for distillation. The 1-propanol is brought to a boil. As the propanol starts to condense and move into receiver flask, the deionized sol is pumped into the round bottom flask to maintain constant volume in the flask. After all of the deionized sol is pumped in, the flask contents contains approximately 15% SiO₂. The liquid is slightly turbid and shows no sign of gelation or precipitation. The mixture is heated to reflux for 3 hours to complete the silanization reaction. No sign of gelation or coagulation is observed in the flask. At this point, a few drops of this mixture that is added to water results in the silica coagulating and precipitating, indicating that the surface of the silica has been modified.

To remove additional water from the mixture, the condenser is changed again to a distillation configuration. The mixture is heated to boiling until liquid (an azeotropic mixture of the 1-propanol and water) starts condensing in the receiver flask, at which point 1-propanol is pumped into the flask at a rate such that the liquid volume in the flask is maintained. 1-propanol is added until the vapor temperature (initially about 92°C) increased to that of 1-propanol (97-98°C). At this point, the sol containing about 15% SiO₂ shows no sign of gelation or precipitation. The 1-propanol feed is discontinued and the volume in the flask is allowed to decrease to about half of the initial volume. 550 g of this propanol sol containing 34.4% SiO₂ by gravimetric determination is obtained.

350 g of a mineral oil commonly used as a dispersant in tire manufacture is placed in a 500-mL round bottom flask and connected to an overhead stirrer and condenser in a vacuum distillation configuration. Vacuum, although not required, is helpful to reduce the formation of foam during this step. Heat is applied until the mineral oil's liquid temperature is about 55°C, at which time about 100 mL of the propanol sol is added to the mineral oil. The temperature is maintained in the range 100-115°C to remove the propanol from the mineral oil. 436 g of the propanol sol is pumped into the flask at such a rate that a constant volume is maintained in the flask. Distillation is continued until substantially all of the propanol is removed. At this point, the mineral oil sol is viscous but still fluid with no sign of gelation or separation of the silica from the oil. When cooled, the mineral oil sol contains 27% SiO₂ by gravimetric determination. The mixture is very viscous but still fluid and shows no sign of gelation or separation.

### EXAMPLE 2

The metal oxide dispersion prepared in Example 1 is then incorporated into a rubber formulation in the proportions set forth in Table 1. The mixtures characterized by "I" are mixtures of which the rubber article according to the invention is composed, whereas the mixture characterized by "C" is a comparative mixture. In all mixture examples present in the Table 1, the stated amounts are parts by weight, which are based on 100 parts by weight of total rubber (phr).

The preparation of the mixture was effected under customary conditions in two stages in a laboratory tangential mixer. Test specimens were produced from all mixtures by vulcanization, and material properties typical for the rubber industry were determined using these test specimens. The following test methods were used for the above-described tests on test specimens:
- Shore A hardness at room temperature and 70°C according to DIN 53 505
- Resilience at room temperature and 70°C according to DIN 53 512
- Tensile stress values at 100 and 200% elongation at room temperature according to DIN 53 504
- Tensile strength at room temperature according to DIN 53 504
- Elongation at break at room temperature according to DIN 53 504
- Particle count and particle area by analysis by optical microscopy

**Table 1**

| **Constituents** | **Unit** | **C1** | **I1** | **I2** |
|---|---|---|---|---|
| BR^{a} | phr | 50 | 50 | 50 |
| SSBR^{b} | phr | 50 | 50 | 50 |
| Silica^{c} | phr | 7 | -- | -- |
| Silica^{d} | phr | -- | 52 | 52 |
| Plasticizer^{e} | phr | 45 | -- | -- |
| Zinc stearate | phr | 1 | 1 | 1 |
| Silane^{f} | phr | 1.2 | -- | 1.0 |
| DPG/CBS/sulphur | phr | 2/2/2 | 2/2/2 | 2/2/2 |

| | | | | |
|---|---|---|---|---|
| ^{a}High-cis polybutadiene, cis proportion ≥ 95% by weight, Buna CB25, from Lanxess ^{b}SSBR styrene-butadiene rubber, Nipol NS116R, from Nippon Zeon ^{c}VN3, from Evonik ^{d}colloidal silica, 13.2% by weight in TDAE oil, average particle size about 22 nm, CTAB about 138 m2/g ^{e}TDAE oil ^{f}A 1589, from Momentive Performance Materials | | | | |

**Table 2**

| **Properties** | **Unit** | **C1** | **I1** | **I2** |
|---|---|---|---|---|
| Hardness at RT | Shore A | 30.9 | 29.4 | 30.8 |
| Hardness at 70°C | Shore A | 32.2 | 29.6 | 31.5 |
| Resilience at RT | % | 63.8 | 60.4 | 61.9 |
| Resilience at 70°C | % | 67.6 | 65.1 | 67.3 |
| Delta resilience | % | 3.8 | 4.7 | 5.4 |
| Tensile stress value 100% | Mpa | 0.5 | 0.43 | 0.48 |
| Tensile stress value 200% | Mpa | 0.78 | 0.64 | -- |
| Tensile strength at RT | Mpa | 0.8 | 0.7 | 0.7 |
| Elongation at break at RT | % | 238 | 233 | 197 |
| Number of particles | -- | 726 | 17 | 17 |
| Max. particle area | 10⁻⁶m² | 4445 | 402 | 790 |
| Mean particle area | 10⁻⁶m² | 138 | 111 | 108 |

As shown in Table 2, the properties of the elastomeric mixtures improve as a result of the use of colloidal silica. For I1 and I2, the mixture hardness and tearing properties, represented by the tensile stress values, tensile strength and elongation at break, remain virtually constant whereas the wet braking behavior, represented by the resilience at room temperature, apparently deteriorates as compared to C1, and the ecologically relevant rolling resistance behavior, represented by the resilience at 70°C, improves. The values of delta resilience (resilience at 70°C minus resilience at RT) for I1 and I2 substantially increase compared to C1, which improves the combined wet braking and rolling resistance properties. A marked improvement in the metal oxide incorporation in combination with comparable reinforcing properties is also provided with the use of colloidal silica. The analysis by optical microscopy shows that the number of detectable particles is reduced by more than one order of magnitude. At the same time, a substantial reduction of the maximum particle sizes of the detected particles is evident. One of ordinary skill in the art would readily recognize that this improvement in the filler incorporation results in a significant improvement in the abrasion behavior.

## Claims

1. A metal oxide particulate dispersion comprising metal oxide particles suspended in oil, said metal oxide particles having an average particle size of 35 microns or less, wherein the dispersion includes less than 10 % by weight water and water miscible solvent and 10 to 50 % solids, based on the total weight of the dispersion, wherein said metal oxide particles are treated with a hydrophobating agent.

2. The metal oxide particulate dispersion according to claim 1, wherein said metal oxide comprises alumina, silica, zirconia, titania, magnesia or mixtures thereof.

3. The metal oxide particulate dispersion according to claim 1, wherein said metal oxide is fumed, colloidal, boehmitic, precipitated, gel, or mixtures thereof.

4. The metal oxide particulate dispersion according to claim 1, wherein said metal oxide particles comprise colloidal silica.

5. The metal oxide particulate dispersion according to claim 1, wherein said dispersion comprises at least one other metal oxide particulate that possesses a different shape, size, composition or property.

6. The metal oxide particulate dispersion according to claim 1, wherein said oil comprises process oils.

7. The metal oxide particulate dispersion according to claim 1, wherein said dispersion includes less than 5 % by weight water and water miscible solvent, based on the total weight of the dispersion.

8. A method of making a metal oxide particulate dispersion in oil comprising,
forming a dispersion of metal oxide particles in water, removing the water from the dispersion, and
adding oil to the metal oxide particles to form a dispersion wherein the dispersion includes less than 10 % by weight water and water miscible solvent and 10 to 50 % solids, based on the total weight of the dispersion, and wherein said metal oxide particles are treated with a hydrophobating agent.

9. The method of making a metal oxide particulate dispersion according to claim 8, wherein the water is replaced with a water miscible solvent, which is removed prior to formation of the oil and metal oxide particulate dispersion.

10. The method of making a metal oxide particulate dispersion according to claim 8, wherein said metal oxide particles comprise colloidal silica.

11. The method of making a metal oxide particulate dispersion according to claim 8, wherein said dispersion comprises at least one other metal oxide particulate that possesses a different shape, size, composition or property.

12. The method of making a metal oxide particulate dispersion according to claim 8, wherein said the dispersion includes less than 5 % by weight water and water miscible solvent, based on the total weight of the dispersion.

13. A polymeric composition comprising polymer and the dispersion of claim 1.

## Patentansprüche

1. Metalloxidteilchendispersion, die Metalloxidteilchen suspendiert in Öl umfasst, wobei die Metalloxidteilchen eine durchschnittliche Teilchengröße von 35 Mikrometer oder weniger aufweisen, wobei die Dispersion weniger als 10 Gew.-% Wasser und mit Wasser mischbares Lösungsmittel und 10 bis 50 % Feststoffe enthält, bezogen auf das Gesamtgewicht der Dispersion, wobei die Metalloxidteilchen mit hydrophobierendem Mittel behandelt sind.

2. Metalloxidteilchendispersion nach Anspruch 1, bei der das Metalloxid Aluminiumoxid, Siliciumdioxid Zirkondioxid, Titandioxd, Magnesiumoxid oder Mischungen davon umfasst.

3. Metalloxidteilchendispersion nach Anspruch 1, bei der das Metalloxid rauchend, kolloidal, böhmitisch, ausgefällt, Gel oder Mischungen davon ist.

4. Metalloxidteilchendispersion nach Anspruch 1, bei der die Metalloxidteilchen kolloidales Siliciumdioxid umfassen.

5. Metalloxidteilchendispersion nach Anspruch 1, bei der die Dispersion mindestens ein anderes teilchenförmiges Metalloxidmaterial umfasst, das eine andere Gestalt, Größe, Zusammensetzung oder Eigenschaft besitzt.

6. Metalloxidteilchendispersion nach Anspruch 1, bei der das Öl Verarbeitungsöle umfasst.

7. Metalloxidteilchendispersion nach Anspruch 1, bei der die Dispersion weniger als 5 Gew.-% Wasser und mit Wasser mischbares Lösungsmittel enthält, bezogen auf das Gesamtgewicht der Dispersion.

8. Verfahren zur Herstellung einer Metalloxidteilchendispersion in Öl, das
Bilden einer Dispersion von Metalloxidteilchen in Wasser,
Entfernen des Wassers aus der Dispersion und
Zugeben von Öl zu den Metalloxidteilchen umfasst, um eine Dispersion zu bilden, die weniger als 10 Gew.-% Wasser und mit Wasser mischbares Lösungsmittel und 10 bis 50 % Feststoffe enthält, bezogen auf das Gesamtgewicht der Dispersion, wobei die Metalloxidteilchen mit hydrophobierendem Mittel behandelt sind.

9. Verfahren zur Herstellung einer Metalloxidteilchendispersion nach Anspruch 8, bei dem das Wasser durch ein mit Wasser mischbares Lösungsmittel ersetzt wird, das vor der Bildung der Öl- und Metalloxidteilchendispersion entfernt wird.

10. Verfahren zur Herstellung einer Metalloxidteilchendispersion nach Anspruch 8, bei dem die Metalloxidteilchen kolloidales Siliciumdioxid umfassen.

11. Verfahren zur Herstellung einer Metalloxidteilchendispersion nach Anspruch 8, bei dem die Dispersion mindestens ein anderes teilchenförmiges Metalloxidmaterial umfasst, das eine andere Gestalt, Größe, Zusammensetzung oder Eigenschaft besitzt.

12. Verfahren zur Herstellung einer Metalloxidteilchendispersion nach Anspruch 8, bei dem die Dispersion weniger als 5 Gew.-% Wasser und mit Wasser mischbares Lösungsmittel enthält, bezogen auf das Gesamtgewicht der Dispersion.

13. Polymere Zusammensetzung, die Polymer und die Dispersion gemäß Anspruch 1 umfasst.

## Revendications

1. Une dispersion de particules d'oxyde métallique comprenant des particules d'oxyde métallique en suspension dans de l'huile, ces particules d'oxyde métallique ayant une taille de particules moyenne de 35 microns ou moins, laquelle dispersion comprend moins de 10% en poids d'eau et de solvant miscible à l'eau, et 10 à 50% de solides, exprimés par rapport au poids total de la dispersion et dans laquelle lesdits particules d'oxyde métallique sont traitées par un agent hydrophobant.

2. La dispersion de particules d'oxyde métallique selon la revendication 1, dans laquelle ledit oxyde métallique comprend de l'alumine, de la silice, de la zircone, du dioxyde de titane, de la magnésie ou des mélanges de ceux-ci.

3. La dispersion de particules d'oxyde métallique selon la revendication 1, dans laquelle ledit oxyde de métal est sous forme pyrogénée, colloïdale, bohémistique, précipitée, gélifiée ou leurs mélanges.

4. La dispersion de particules d'oxyde métallique selon la revendication 1, dans laquelle lesdites particules d'oxyde métallique comprennent de la silice colloïdale.

5. La dispersion de particules d'oxyde métallique selon la revendication 1, dans laquelle ladite dispersion comprend au moins une autre particule d'oxyde métallique qui présente une forme, une taille, une composition ou une propriété différente.

6. La dispersion de particules d'oxyde métallique selon la revendication 1, dans laquelle ladite huile comprend des huiles de traitement.

7. La dispersion de particules d'oxyde métallique selon la revendication 1, dans laquelle ladite dispersion comprend moins de 5% en poids d'eau et de solvant miscible à l'eau, exprimés par rapport au poids total de la dispersion.

8. Un procédé de fabrication d'une dispersion de particules d'oxyde métallique dans de l'huile comprenant :
- la formation d'une dispersion de particules d'oxyde métallique dans l'eau,
- l'élimination de l'eau de la dispersion, et
- l'ajout de l'huile aux particules d'oxyde métallique pour former une dispersion, dans lequel la dispersion comprend moins de 10% en poids d'eau et de solvant miscible à l'eau et de 10 à 50% de solides, exprimés par rapport au poids total de la dispersion et dans lequel lesdits particules d'oxyde métallique sont traitées par un agent hydrophobant.

9. Le procédé de fabrication d'une dispersion de particules d'oxyde métallique selon la revendication 8, dans lequel l'eau est remplacée par un solvant miscible à l'eau, qui est éliminé avant la formation de la dispersion d'huile et de particules d'oxyde métallique.

10. Le procédé de fabrication d'une dispersion de particules d'oxyde métallique selon la revendication 8, dans lequel les particules d'oxyde métallique comprennent de la silice colloïdale.

11. Le procédé de fabrication d'une dispersion de particules d'oxyde métallique selon la revendication 8, dans lequel ladite dispersion comprend au moins une autre particule d'oxyde métallique qui possède une forme, une taille, une composition ou une propriété différente.

12. Procédé de fabrication d'une dispersion de particules d'oxyde métallique selon la revendication 8, dans lequel ladite dispersion comprend moins de 5% en poids d'eau et de solvant miscible à l'eau, exprimés par rapport au poids total de la dispersion.

13. Une composition polymère comprenant un polymère et la dispersion selon la revendication 1.
